# EUROPÄISCHE PATENTSCHRIFT

(11) **EP 0 892 768 B1**
(45) Veröffentlichungstag und Bekanntmachung des Hinweises auf die Patenterteilung: **20.10.1999**
(21) Anmeldenummer: 97920592.9
(22) Anmeldetag: 11.04.1997
(51) Int. Cl.: C04B 41/86, C04B 41/91

(54) **VERFAHREN ZUR VEREDELUNG VON SiC-HEIZSTÄBEN**
PROCESS FOR UPGRADING SiC HEATING ELEMENTS
PROCEDE POUR LA MODIFICATON DE THERMOPLONGEURS EN SiC

(30) Priorität: 13.04.1996 DE 19614676
(43) Veröffentlichungstag der Anmeldung: 27.01.1999
(73) Patentinhaber: Mochan, Heike, 01309 Dresden (DE); Kim, In Chol, Pyongyang City (KP); Choe, Kum Chol, South Pyongan Province (KP)
(72) Erfinder: Mochan, Heike, 01309 Dresden (DE); Kim, In Chol, Pyongyang City (KP); Choe, Kum Chol, South Pyongan Province (KP)
(74) Vertreter: Hudler, Frank, Dipl.-Ing.
(86) Internationale Anmeldenummer: DE9700738
(87) Internationale Veröffentlichungsnummer: WO9738954

(56) Entgegenhaltungen:
- DE-B- 1 246 509
- CARBON, Bd. 33, Nr. 4, 1.Januar 1995, Seiten 435-440, XP000517502 MANOCHA L M ET AL: "STUDIES ON SOLUTION-DERIVED CERAMIC COATINGS FOR OXIDATION PROTECTION OF CARBON-CARBON COMPOSITES"

## Beschreibung

Die Erfindung betrifft ein Verfahren zur Veredelung von SiC-Heizstäben durch Oberflächenveredelung.

Die SiC-Heizstäbe sind unter der Hauptanwendungstemperatur nach bestimmter Zeit nicht mehr verwendbar, da die Hauptkomponente der SiC-Heizstäbe - SiC - in SiO₂ (alpha-Kristobalit) oxydiert und demzufolge der elektrische Widerstand der Heizstäbe zunimmt.

Die Qualität eines SiC-Heizstabes ist davon abhängig, wie lange der Stab bei der Hauptanwendungstemperatur verwendet werden kann. Für die Herstellung von qualitativ guten SiC-Heizstäben wurde die Reinheit des SiC auf über 98 % erhöht und ein Herstellungsverfahren für die verdichteten SiC-Heizstäbe mit der kleinsten Porosität entwickelt.

Oberflächenveredelungsverfahren für den Schutz der Staboberflächen wurden ebenfalls entwickelt.

Die bis jetzt entwickelten Oberflächenveredelungsverfahren können wie nachfolgend in zwei Teile untergliedert werden.

Das erste Verfahren ist die Imprägnierungsmethode, welche darin besteht, daß die Porosität und Gasdurchlässigkeit verringert wird, indem Säuren wie zum Beispiel Phosphorsäure oder Borsäure, Aluminiumacetat oder eine kolloidale Lösung entsprechend der JP 56-52869 (A) in die Poren der SiC-Heizstäbe imprägniert und danach die SiC-Heizstäbe wärmebehandelt werden.

Das zweite Verfahren ist die Überdeckungsmethode. Dieses Verfahren besteht darin, daß die Porosität und Gasdurchlässigkeit der SiC-Heizstäbe verringert werden, indem die temperaturbeständigen chemischen Verbindungen, wie z. B. Oxyde, Glasur, Glas (US-PS 2,993,814) oder MoSi₂ und die Verbindungen mit MoSi₂ (US-PS 3,252,827, US-PS 3,189,477) nur auf die Oberflächen der Heizstäbe aufgebracht werden.

Beispielsweise ist aus der DE 124 65 09 B ein Verfahren zur Herabsetzung der thermischen Alterung eines im wesentlichen aus Siliziumkarbid bestehenden Heizleiters bekannt geworden. Bei diesem Verfahren wird der Heizleiter mit Phosphorsäure imprägniert und nachfolgend anschließend ein hochschmelzendes Oxyd und/oder Silikat aufgebracht. Anschließend wird der Heizleiter bei Temperaturen von 1000°C bis 1.500°C in oxydierender Atmosphäre gebrannt.

Weiterhin wird in CARBON, Bd. 33 Nr. 4, 1. Januar 1995 eine Sol-Gel-Behandlung von Siliziumkarbid zur Oberflächenbehandlung von Siliziumkarbid-Stäben beschrieben. Die Beschichtung der Siliizumkarbid-Stäbe erfolgt hier mit einer Mischung aus Zirkoniumnitrat und Tetraethoxysilan.

Allgemein besteht die Gemeinsamkeit dieser Verfahren darin, daß die Suspension aus den temperaturbeständigen Verbindungen und Glaspulver als Silika-Alumina-System hergestellt wird und diese Suspension auf die Oberflächen der SiC-Heizstäbe auf verschiedene Weise aufgebracht wird und daß die Heizstäbe danach wärmebehandelt werden.

Das Problem des Schutzes der Kontaktbereiche zwischen den SiC-Teilchen und der Grenzflächen der SiC-Teilchen wurde bei diesen Verfahren nicht allzu sehr in Betracht gezogen. Außerdem wurden bei der Auswahl des Oxydationsschutzmittels die Probleme über die gegenseitige Wirkung zwischen SiC und Oxydationsschutzmittel, die Reaktionseigenschaften und die kontinuierliche Filmbildung auf der Staboberfläche ebenfalls nicht allzu sehr beachtet.

Aus diesen Gründen waren die bisher entwickelten Veredelungsverfahren nicht sehr effektvoll.

Der Erfindung liegt deshalb die Aufgabe zugrunde, ein Verfahren zur Veredelung von SiC-Heizstäben zu schaffen, mit dem eine wesentliche Verbesserung der Standzeit der SiC-Heizstäbe erreicht wird.

Erfindungsgemäß wird die Aufgabe dadurch gelöst,
- daß die SiC-Heizstäbe einer Säurebehandlung durch anorganische Säuren oder anorganische Mischsäuren über einen längeren Zeitraum bei im wesentlichen konstanter Temperatur unterzogen werden;
- daß die SiC-Heizstäbe anschließend mit HCL bei erhöhter Temperatur behandelt und nachfolgend mit Wasser gewaschen und getrocknet werden;
- daß die SiC-Heizstäbe mit einer Sol-Lösung aus einer Siloxanverbindung, bestehend aus einem Si(OC₂H₅)₄-H₂O-C₂H₅OH-HCl-System mit einem Hauptbestandteil von Si(OC₂H₅)₄, sowie Oxydationsschutzmitteln aus durch Hydrolyse von Si(OC₂H₅)₄ hergestelltem SiO₂ sowie Al₂O₃ und/oder ZrO₂ mehrfach imprägniert und getrocknet werden, bis die Sol-Lösung nicht mehr absorbiert wird und
- daß die SiC-Heizstäbe nach dem Übergang der Sol-Lösung in den amorphen Gelzustand bei einer Temperatur von wesentlich größer als 1000 °C kurzzeitig wärmebehandelt werden.

Die der Erfindung zugrundeliegende Aufgabe wird also gelöst mit der Säurebehandlung der SiC-Heizstäbe mit anorganischen Säuren oder Mischsäuren und einem nachfolgenden Oxydationsschutz. In SiC-Heizstäben existieren im allgemeinen verschiedene Verunreinigungen und nicht ganz entwickelte SiC-Kristalle. Abhängig von den Sorten und Gehalten der Verunreinigungen und ihrer Verteilungseigenschaften in SiC-Heizstäben werden die Heizstäbe deshalb mit einzelnen anorganischen Säuren oder anorganischen Mischsäuren behandelt.

Anschließend werden sie mit Wasser gewaschen und danach getrocknet. Im Anschluß daran wird obige Sol-Lösung der Siloxanverbindung aus dem Si(OC₂H₅)₄-H₂O-C₂H₅OH-HCl System hergestellt, wobei Hauptmaterial Si(OC₂H₅)₄ ist. Danach wird die Sol-Lösung für die Bildung des Mikrokristallglases hergestellt.

Diese Sol-Lösung ist dadurch gekennzeichnet, daß
- SiO₂-ZrO₂ Systeme
   (SiO₂: 32 - 88 Masse %, ZrO₂ : 12 - 68 Masse %),
   oder
- SiO₂-Al₂O₃ Systeme
   (SiO₂: 25 - 85 Masse %, Al₂O₃ : 15 - 75 Masse %)
   oder
- SiO₂-Al₂O₃-ZrO₂ Systeme
   (SiO₂: 30 - 86 %, Al₂O₃: 9 - 45 Masse %, ZrO₂: 5 - 25 Masse%)
aus der Sol-Lösung der Siloxanverbindung und

ZrOCl₂*8H₂O-C₂H₅OH, Al(NO₃)₃*9H₂O (oder AlCl₃*6H₂O)-ZrOCl₂*8H₂O-C₂H₅OH

Systemen hergestellt werden.

Danach wird diese Sol-Lösung auf verschiedene Weise in die SiC-Heizstäbe imprägniert.

Die anorganische Mischsäure besteht vorzugsweise aus
10 - 30 % Fluorwasserstoffsäure,
60 - 80 % Salpetersäure und
70 - 90 % Schwefelsäure,
wobei die Behandlung mit dieser Mischsäurelösung bei etwa 40 °C über einen Zeitraum von 4h erfolgt.

In einer weiteren Ausgestaltung der Erfindung erfolgt die Salzsäurebehandlung der SiC-Heizstäbe in Stufen, wobei die Konzentration der Salzsäure zwischen 5 % bis 25 % variiert wird. Die Dauer der Behandlung beträgt ca. 4 h und wird bei einer Temperatur von 40 - 60 °C durchgeführt.

Nach der Salzsäurebehandlung werden die SiC-Heizstäbe mit reinem Wasser mit einem PH-Wert zwischen 6,5 - 7,0 gewaschen und dann in einem Trockenofen über ca. 8h bei 100 - 120 °C getrocknet.

Die Sol-Lösung enthält als Oxydationsschutzmittel die Systeme
- SiO₂, welches durch Hydrolyse von Si(OC₂H₅)₄ hergestellt worden ist, oder
- SiO₂ - ZrO₃ , wobei
   SiO₂ : 32 - 88 Masse-% und
   ZrO₃ : 12 - 68 Masse-% aufweist,
   oder
- SiO₂ - Al₂O₃, wobei
   SiO₂ : 25 - 85 Masse-% und
   Al₂O₃: 15 - 75 Masse-% aufweist,
   oder
- SiO₂ - Al₂O₃ - ZrO₂ , wobei
   SiO₂ : 30 - 86 Masse-%,
   Al₂O₃: 9 - 45 Masse-% und
   ZrO₃ : 5 - 25 Masse-% aufweist.

Das SiO₂ - ZrO₂ - System wird dabei aus
- Si(OC₂H₅)₄ und
- ZrOCl₂ * 8 H₂O - C₂H₅OH
hergestellt.

Das SiO₂ - Al₂O₃ - System wird aus
- Si(OC₂H₅)₄ und
- Al(NO₃)₃ * 9 H₂O oder AlCl₃ * 6 H₂O
hergestellt.

Das SiO₂ - Al₂O₃ - ZrO₂ - System wird aus
- Si(OC₂H₅)₄ und
- Al(NO₃)₃ * 9 H₂O oder AlCl₃ * 6 H₂O und
- ZrOCl₂ * 8 H₂O
hergestellt.

In Fortführung der Erfindung wird die Wärmebehandlung der SiC-Heizstäbe zur Oberflächenverglasung über ca. 5 min bei einer Temperatur von ca. 1500 - 1600 °C durchgeführt, nachdem die Sol-Lösung in den amorphen Gelzustand übergegangen ist.

Die SiC-Heizstäbe werden für die Wärmebehandlung an einen elektrischen Stromkreis angeschlossen.

Mit der durch die Poren der Heizstäbe imprägnierten Sol-Lösung werden die Grenzflächen der SiC-Teilchen, Kontaktbereiche der SiC-Teilchen, die Poren der Heizstäbe und die geometrischen Staboberflächen einheitlich überdeckt. Bald danach geht die Sol-Lösung in den amorphen Gelzustand über. Dann werden die veredelten SiC-Heizstäbe wärmebehandelt.

Die Erfindung bietet folgende Vorteile:

Die Standzeit der SiC-Heizstäbe wird verlängert, indem ein kontinuierlicher Oxydationsschutzfilm auf den Grenzflächen der SiC-Teilchen, den Kontaktbereichen, den Poren und den Oberflächen der SiC-Heizstäbe gebildet wird.

Das Oxydationsschutzmittel reagiert selbst bei der Hauptanwendungstemperatur nicht mit SiC und die wärmephysikalische Eigenschaft dieses Oxydationsschutzmittels stimmt mit der Eigenschaft von SiC überein.

Der Veredelungsprozeß der SiC-Heizstäbe ist unkompliziert, dennoch sind die Veredelungseffekte hoch.

Das nachfolgende Beispiel soll die Erfindung näher erläutern.
Größe der SiC-Heizstäbe: O 18 / 300 (350) / SHS

### Physikochemische Eigenschaft der SiC-Heizstäbe:

### chemische Zusammensetzung (Masse %):

| | |
|---|---|
| SIC | 98,33 |
| Si | 0,16 |
| SiO2 | 0,00 |
| Fe | 0,40 |
| Al2O₃ | 0,57 |
| CaO | 0,05 |
| MgO | 0,00 |

| | |
|---|---|
| Porosität | 31 % |
| Dichte | 2,20 g/cm2 |
| Biegefestigkeit | 37 Mpa |

Die SiC-Heizstäbe werden zuerst in der Fluorwasserstoffsäurelösung von ca. 15 % behandelt.

Danach werden sie in der Mischsäurelösung, welche aus 10 - 30 % Fluorwasserstoffsäure, 60 - 80 % Salpetersäure und 70 - 90 % Schwefelsäure besteht, für einen Zeitraum von 4 Stunden behandelt. Dabei bleibt die Temperatur der Mischsäurelösung bei 40 °C konstant.

Anschließend erfolgt die Salzsäurebehandlung für einen Zeitraum von jeweils 4 Stunden bei einer Konzentration von 25 %, 15 % und 5 %. Im Anschluß daran werden die Heizstäbe mit sauberem Wasser bis zu einem PH-Wert von 6,5 - 7,0 gewaschen und dann im Trockenofen bei 100 - 120 °C 8 Stunden getrocknet.

Dabei liegt die Temperatur der Salzsäurelösung bei 40 - 60 °C und die Wassertemperatur bei 60 - 70 °C.

Zuerst wird die Sol-Lösung aus der Siloxanverbindung hergestellt.

### Zusammensetzung der Sol-Lösung:

| | |
|---|---|
| Si(OC₂H₅)₄ | 250 g |
| C₂H₅OH (95 %) | 376 g |
| destilliertes Wasser | 235 g |
| HCl (35 %) | 3 g |

Es werden 250 g Si(OC₂H₅)₄ und 188 g C₂H₅OH gemischt. Der Rest von C₂H₅OH, 188 g, destilliertes Wasser in einer Menge von 235g und HCl in einer Menge von 3 g werden danach gemischt.

In die zuerst gemischte Lösung, bestehend aus dem Si(OC₂H₅)₄-C₂H₅OH-System, wird die später gemischte Lösung allmählich (ca. 40 min.) eingerührt.

Diese gemischte Lösung wird 30 - 48 Stunden bei 30 °C im Thermostat gelagert und geht in dieser Zeit in eine Siloxanverbindung über.

Danach wird das gereinigte ZrOCl₂*8H₂O - 420 g - in C₂H₅OH - 500g - gelöst. Diese Lösung wird mit der Sol-Lösung aus der Siloxanverbindung vermischt. Das so hergestellte Oxydationsschutzmittel wird in die SiC-Heizstäbe imprägniert.

Die Imprägnierung erfolgt durch Bepinseln oder Zerstäuben der Lösung auf die Staboberflächen.

Danach werden die so veredelten SiC-Heizstäbe getrocknet. Dieser Vorgang wird drei- bis fünfmal wiederholt, bis die Lösung des Oxydationsschutzmittels auf der Staboberfläche nicht mehr absorbiert wird.

Auf die Anschlußenden der veredelten Heizstäbe wird elektrischer Strom geleitet.

Bei 1550 °C werden die Heizstäbe dann für ca. 5 Minuten wärmebehandelt.

Der Test der veredelten SiC-Heizstäbe wurde nach der japanischen Industrienorm JISR 7501 (13) durchgeführt.

Das Testergebnis nach dieser Versuchsmethode zeigt einen elektrischen Widerstandszunahmegrad in %:

| | |
|---|---|
| vor der Veredelung | 6,3 |
| nach der Veredelung | 2,1 |

## Patentansprüche

1. Verfahren zur Veredelung von SiC-Heizstäben durch Oberflächenveredelung, **dadurch gekennzeichnet,**
- daß die SiC-Heizstäbe einer Säurebehandlung durch anorganische Säuren oder anorganische Mischsäuren über einen längeren Zeitraum bei im wesentlichen konstanter Temperatur unterzogen werden;
- daß die SiC-Heizstäbe anschließend mit HCl bei erhöhter Temperatur behandelt und nachfolgend mit Wasser gewaschen und getrocknet werden;
- daß die SiC-Heizstäbe mit einer Sol-Lösung aus einer Siloxanverbindung, bestehend aus einem Si(OC₂H₅)₄ - H₂O - C₂H₅OH - HCl - System mit einem Hauptbestandteil von Si(OC₂H₅)₄, sowie Oxydationsschutzmitteln aus durch Hydrolyse von Si(OC₂H₅)₄ hergestelltem SiO₂ sowie Al₂O₃ und/oder ZrO₂ mehrfach imprägniert und getrocknet werden, bis die Sol-Lösung nicht mehr absorbiert wird und
- daß die SiC-Heizstäbe nach dem Übergang der Sol-Lösung in den amorphen Gelzustand bei einer Temperatur von wesentlich größer als 1000 °C kurzzeitig wärmebehandelt werden.

2. Verfahren nach Anspruch 1, **dadurch gekennzeichnet,** daß daß die anorganische Mischsäure aus
10 - 30 % Fluorwasserstoffsäure,
60 - 80 % Salpetersäure und
70 - 90 % Schwefelsäure
besteht.

3. Verfahren nach Anspruch 1 und 2, **dadurch gekennzeichnet,** daß die Behandlung mit der Mischsäurelösung bei etwa 40 °C über einen Zeitraum von 4h erfolgt.

4. Verfahren nach Anspruch 1, **dadurch gekennzeichnet,** daß die Salzsäurebehandlung der SiC-Heizstäbe in Stufen erfolgt, wobei die Konzentration der Salzsäure zwischen 5 % bis 25 % variiert und daß die Dauer der Behandlung ca. 4 h beträgt und bei einer Temperatur von 40 - 60 °C durchgeführt wird.

5. Verfahren nach Anspruch 4, **dadurch gekennzeichnet,** daß die SiC-Heizstäbe nach der Salzsäurebehandlung mit reinem Wasser mit einem PH-Wert von 6,5 - 7,0 gewaschen und dann in einem Trockenofen über ca. 8h bei 100 - 120 °C getrocknet werden.

6. Verfahren nach Anspruch 1, **dadurch gekennzeichnet,** daß die Sol-Lösung die Systeme
- SiO₂ - ZrO₃, wobei
SiO₂ : 32 - 88 Masse-% und
ZrO₃ : 12 - 68 Masse-% aufweist,
oder
- SiO₂ - Al₂O₃, wobei
SiO₂ : 25 - 85 Masse-% und
Al₂O₃: 15 - 75 Masse-% aufweist,
oder
- SiO₂ - Al₂O₃ - ZrO₂ , wobei
SiO₂ : 30 - 86 Masse-%,
Al₂O₃: 9 - 45 Masse-% und
ZrO₃ : 5 - 25 Masse-% aufweist,
als Oxydationsschutzmittel enthält.

7. Verfahren nach Anspruch 6, **dadurch gekennzeichnet,** daß das SiO₂ - ZrO₂ - System aus
- Si(OC₂H₅)₄ und
- ZrOCl₂ * 8 H₂O - C₂H₅OH
hergestellt wird.

8. Verfahren nach Anspruch 6, **dadurch gekennzeichnet,** daß das SiO₂ - Al₂O₃ - System aus
- Si(OC₂H₅)₄ und
- Al(NO₃)₃ * 9 H₂O oder AlCl₃ * 6 H₂O
hergestellt wird.

9. Verfahren nach Anspruch 6, **dadurch gekennzeichnet**, daß das SiO₂ - Al₂O₃ - ZrO₂ - System aus
- Si(OC₂H₅)₄ und
- Al(NO₃)₃ * 9 H₂O oder AlCl₃ * 6 H₂O und
- ZrOCl₂ * 8 H₂O
hergestellt wird.

10. Verfahren nach Anspruch 1, **dadurch gekennzeichnet,** daß die Wärmebehandlung der SiC-Heizstäbe zur Oberflächenverglasung über ca. 5 min bei einer Temperatur von ca. 1500 - 1600 °C durchgeführt wird.

11. Verfahren nach Anspruch 10, **dadurch gekennzeichnet,** daß die SiC-Heizstäbe für die Wärmebehandlung an einen elektrischen Stromkreis angeschlossen werden.

## Claims

1. Process for improving SiC heating elements by means of surface refinement,
**characterized in that**
- the SiC heating elements are subjected to an acid cure by inorganic acids or inorganic lactic acids over a longer period of time at an essentially constant temperature;
- the SiC heating elements are treated afterwards with HCI at an increased temperature and then rinsed with water and dried;
- the SiC heating elements are impregnated several times with a Sol solution from a siloxane compound, consisting of a Si(OC₂H₅)₄ - H₂O - C₂H₂OH - HCI system with a principal constituent of Si(OC₂H₅)₄, as well as antioxidants of SiO₂ produced by hydrolysis of Si(OC₂H₅)₄, as well as Al₂O₃ and/or ZrO₂ and dried until the Sol solution is no longer absorbed and
- the SiC heating elements are heat treated shortly at a temperature considerably higher than 1000° C after transition of the Sol solution into the amorphous gel state.

2. Process according to claim 1, **characterized in that** the inorganic lactic acid consists of
10 - 30 % hydrofluoric acid
60 - 80 % nitric acid and
70 - 90 % sulfuric acid.

3. Process according to claims 1 and 2, **characterized in that** the treatment with the lactic acid solution takes place at a temperature of about 40° C over a period of 4 hours.

4. Process according to claim 1, **characterized in that** the treatment of the SiC heating elements with hydrochloric acid takes place in stages, wherein the concentration of hydrochloric acid varies between 5 % and 25 % and that the duration of the treatment is approx. 4 hours and is conducted at a temperature of 40- 60° C.

5. Process according to claim 4, **characterized in that** after the treatment with hydrochloric acid, the SiC heating elements are rinsed with pure water with a PH value of 6.5 - 7.0 and then dried in a drying kiln for approx. 8 hours at 100 - 120° C.

6. Process according to claim 1, **characterized** in that the Sol solution contains one of the following systems as an antioxidant:
- SiO₂ - ZrO₃, where
SiO₂ has a mass % of 32 - 88 and
ZrO₃ has a mass % of 12- 68,
or
- SiO₂ - Al₂O₃, where
SiO₂ has a mass % of 25 - 85 and
Al₂O₃ has a mass % of 15 - 75,
or
- SiO₂ - Al₂O₃ - ZrO₂, where
SiO₂ has a mass % of 30 - 86
Al₂O₃ has a mass % of 9 - 45 and
ZrO₃ has a mass % of 5 - 25.

7. Process according to claim 6, **characterized in that** the SiO₂ - ZrO₂ system is produced from
- Si(OC₂H₅)₄ and
- ZrOCl₂ * 8 H₂O - C₂H₅OH.

8. Process according to claim 6, **characterized in that** the SiO₂ - Al₂O₃ system is produced from
- Si(OC₂H₅)₄ and
- Al(NO₃)₃ * 9 H₂O or AlCl₃ * 6 H₂O.

9. Process according to claim 6, **characterized in that** the SiO₂ - Al₂O₃ - ZrO₂ system is produced from
- Si(OC₂H₅)₄ and
- Al(NO₃)₃ * 9 H₂O or AlCl₃ * 6 H₂O and
- ZrOCl₂ * 8 H₂O.

10. Process according to claim 1, **characterized in that** the heat treatment of the SiC heating elements for surface glazing is conducted for approx. 5 minutes at a temperature of approx. 1500 - 1600° C.

11. Process according to claim 10, **characterized in that** the SiC heating elements are connected to an electric circuit for the heat treatment.

## Revendications

1. Procédé de purification des thermoplongeurs en SiC par purification de la surface, caractérisé en ce que
- les thermoplongeurs en SiC sont soumis à un traitement aux acides inorganiques ou aux mélanges sulfonitriques inorganiques sur une durée relativement longue à une température essentiellement constante ;
- les thermoplongeurs en SiC sont ensuite traités avec du HCl à une température élevée, puis lavés à l'eau et séchés ;
- les thermoplongeurs en SiC sont imprégnés à plusieurs reprises avec une solution sol constituée d'un composé siloxane à base d'un système Si(OC₂H₅)₄ - H₂O - C₂H₅OH - HCl avec un composant principal de Si(OC₂H₅)₄ et d'agents de protection contre l'oxydation constitués de SiO₂ obtenu par hydrolyse de Si(OC₂H₅)₄ ainsi que de Al₂O₃ et/ou de ZrO₂, puis ils sont séchés jusqu'à ce que la solution sol ne soit plus absorbée et
- en ce que les thermoplongeurs en SiC subissent un traitement thermique bref une fois que la solution sol est passée à l'état de gel amorphe à une température essentiellement supérieure à 1000°C.

2. Procédé selon la revendication 1, caractérisé en ce que le mélange sulfonitrique inorganique se compose de
10 à 30 % d'acide fluorhydrique,
60 à 80 % d'acide nitrique et
70 à 90 % d'acide sulfurique.

3. Procédé selon les revendications 1 et 2, caractérisé en ce que le traitement avec la solution de mélange sulfonitrique est effectué à une température de 40°C environ sur une période de 4 heures.

4. Procédé selon la revendication 1, caractérisé en ce que le traitement à l'acide chlorhydrique des thermoplongeurs en SiC se fait par étapes, sachant que la concentration de l'acide chlorhydrique varie entre 5 et 25 % et que le traitement dure environ 4 heures et qu'il est effectué à une température de 40 à 60 °C.

5. Procédé selon la revendication 4, caractérisé en ce que les thermoplongeurs en SiC sont lavés, après le traitement à l'acide chlorhydrique, avec une eau pure présentant un pH de 6,5 à 7 puis ils sont séchés dans un four à 100 - 120°C.

6. Procédé selon la revendication 1, caractérisé en ce que la solution sol comporte, comme agents de protection contre l'oxydation, les systèmes
- SiO₂ - ZrO₃, sachant que
SiO représente 32 à 88 % de la masse et
ZrO₃ représente 12 à 68 % de la masse,
ou
- SiO₂ - Al₂O₃, sachant que
SiO₂ représente 25 à 85 % de la masse et
Al₂O₃ représente 15 à 75 % de la masse,
ou
SiO₂ - Al₂O₃ - ZrO₂, sachant que
SiO₂ représente 30 à 86 % de la masse,
Al₂O₃ représente 9 à 45 % de la masse et
ZrO₃ représente 5 à 25 % de la masse.

7. Procédé selon la revendication 6, caractérisé en ce que le système SiO₂ - ZrO₂ est fabriqué à partir de
- Si(OC₂H₅)₄ et
- ZrOCl₂ * 8 H₂O - C₂H₅OH

8. Procédé selon la revendication 6, caractérisé en ce que le système SiO₂ - Al₂O₃ est fabriqué à partir de
- Si(OC₂H₅)₄ et
- Al(NO₃)₃ * 9 H₂O ou AlCl₃ * 6 H₂O

9. Procédé selon la revendication 6, caractérisé en ce que le système SiO₂ - Al₂O₃- ZrO₂ est fabriqué à partir de
- Si(OC₂H₅)₄ et
- Al(NO₃)₃ * 9 H₂O ou AlCl₃ * 6 H₂O et
- ZrOCl₂ * 8 H₂O

10. Procédé selon la revendication 1, caractérisé en ce que le traitement thermique des thermoplongeurs en SiC pour la vitrification de surface est effectué pendant 5 minutes environ à une température de 1500 à 1600 °C environ.

11. Procédé selon la revendication 10, caractérisé en ce que les thermoplongeurs en SiC sont raccordés à un circuit électrique pour le traitement thermique.
